# EUROPEAN PATENT SPECIFICATION

(11) **EP 2 669 970 B1**
(45) Date of publication and mention of the grant of the patent: **14.05.2014**
(21) Application number: 12186150.4
(22) Date of filing: 26.09.2012
(51) Int. Cl.: H01M 2/16, H01M 10/052, H01M 2/14, H01M 10/0587

(54) **Separator for rechargeable lithium battery and rechargeable lithium battery including the same**
Separator für eine wiederaufladbare Lithiumbatterie und wiederaufladbare Lithiumbatterie damit
Séparateur pour batterie rechargeable au lithium et batterie rechargeable au lithium la comprenant

(30) Priority: 01.06.2012 US 201261654780 P; 29.08.2012 US 201213598165
(43) Date of publication of application: 04.12.2013
(73) Proprietor: Samsung SDI Co., Ltd., Yongin-si, Gyeonggi-do (KR)
(72) Inventor: YEOU, Jung-Ock, Gyeonggi-do (KR); KIM, Ihn, Gyeonggi-do (KR); PARK, Sam-Jin, Gyeonggi-do (KR); CHOI, Kwi-Seok, Gyeonggi-do (KR)
(74) Representative: Russell, Tim

(56) References cited:
- WO-A1-2011/040474
- WO-A1-2012/019626
- US-A1- 2011 229 768

## Description

The present invention relates to a separator for a lithium rechargeable battery and a lithium rechargeable battery including the same. The invention also relates to a method of preparing the separator.

A conventional rechargeable lithium battery includes a separator made of a porous insulating film and interposed between positive and negative electrodes, and the pores of the film are impregnated by an electrolyte solution including a lithium salt dissolved therein. The non-aqueous rechargeable lithium battery has excellent high-capacity and high energy density characteristics.

However, when the positive and negative electrodes therein are repetitively contracted and expanded during the charge and discharge cycles and thus, react with a separator or an electrolyte solution, the non-aqueous rechargeable lithium battery may be easily deteriorated, have internal and external short circuits, and rapidly become hot. When the battery rapidly becomes hot as aforementioned, the separator is fused and rapidly contracted or destroyed and thus, short-circuited again.

In order to prevent this problem, a conventional separator is generally formed of a porous polyethylene film having excellent shutdown characteristics, which is easily handledand low cost. Herein, the shutdown indicates that a separator is partly fused and thus, closes pores and cuts off a current, when a battery is heated up due to overcharge, external or internal short circuit, and the like.

In addition, an attempt has been made to improve safety of the rechargeable lithium battery by improving heat resistance of an electrode material for a separator and the like and in particular, to secure safety even when a separator therein is sharply contracted or destroyed.

The present invention provides a separator for a lithium rechargeable battery according to claim 1 that includes a porous substrate; and a coating layer disposed on at least one side of the porous substrate and including a binder polymer in an amount of 50 to 99 wt% based on the total amount of the coating layer, and further comprising organic particles included in the coating layer, wherein the organic particles and the binder polymer are different materials from each other.

The organic particles may have an average particle diameter of 1 nm to 1,000 nm.

The binder polymer may be included in an amount of 70 to 99 wt% based on the total amount of the coating layer.

The organic particles may be included in an amount of 1 to 50 wt% based on the total amount of the binder polymer and the organic particles. The organic particles may be included in an amount of 1 to 30 wt% based on the total amount of the binder polymer and the organic particles.

The organic particles may be obtained from at least one organic compound selected from an acrylate-based compound, a diallyl phthalate-based compound, a polyimide-based compound, derivatives thereof, copolymers thereof, and mixtures thereof.

The organic particle may be positioned continuously or discontinuously on the surface of the binder polymer.

The binder polymer may include a polymer formed by the polymerization of at least one monomer selected from the group consisting of an ethylenic unsaturated carboxylic acid alkyl ester, a nitrile-based compound, a conjugated diene-based compound, an ethylenic unsaturated carboxylic acid and salts thereof, an aromatic vinyl compound, a fluoroalkylvinylether, vinylpyridine, a non-conjugated diene-based compound, an α-olefin, an ethylenic unsaturated amide compound, and a sulfonic acid-based unsaturated compound.

The binder polymer may further include a polymer formed by the polymerization of one or more monomers having at least one functional group selected from a hydroxyl group, a glycidyl group, an amino group, an N-methylol group, and a vinyl group.

The binder polymer may be formed from an emulsion comprising binder polymer particles.

The binder polymer may have the form of an emulsion including binder polymer particles dispersed therein. The binder polymer particles may have an average particle diameter of 0.01 µm to 0.5 µm.

The binder polymer may be included in an amount of 80 to 99 wt% based on the total amount of the coating layer.

The coating layer may further include a binder. The binder may include a silane-based compound.

The silane-based compound may include at least one functional group selected from an alkoxy group, a halogen group, an amino group, a vinyl group, a glycidoxy group, and a hydroxy group.

The silane-based compound may include one selected from vinyl alkylalkoxysilane, epoxyalkylalkoxysilane, aminoalkylalkoxysilane, mercaptoalkylalkoxysilane, halogenated alkylalkoxysilane, vinylhalosilane, and alkylacyloxysilane.

The binder may be included in an amount of 0.05 to 5 parts by weight based on 100 parts by weight of the binder polymer.

The organic particles may be provided, at least in part, at the surface of the binder polymer.

The porous substrate may include at least one selected from a glass fiber, polyester, TEFLON, polyolefin, polytetrafluoroethylene (PTFE), and polyacrylonitrile.

A separator for a lithium rechargeable battery according to the present invention may lead to improved safety of a battery due to excellent heat resistance. The separator having excellent heat resistance can provide a lithium rechargeable battery having improved safety and reduce the manufacturing cost of the separator.

An aspect of the present invention provides a lithium rechargeable battery including a positive electrode; a negative electrode; an electrolyte solution; and the separator.

An aspect of the present invention provides a method of preparing a separator for a rechargeable lithium battery, the method comprising:
providing a porous substrate;
preparing an emulsion comprising binder polymer particles and forming a binder polymer from the emulsion;
mixing the binder polymer with organic particles to form a coating layer composition; and
applying the coating layer composition on the porous substrate.

A more complete appreciation of the present invention, and many of the attendant advantages thereof, will be readily apparent as the same becomes better understood by reference to the following detailed description when considered in conjunction with the accompanying drawings, wherein:

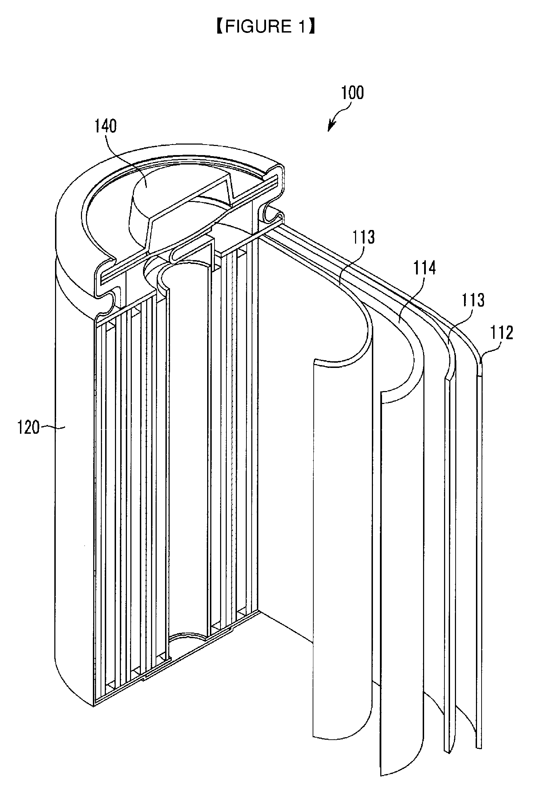

FIGURE 1 is a schematic view showing a rechargeable lithium battery according to an embodiment.

A separator for a lithium rechargeable battery according to the invention includes a porous substrate, and a coating layer positioned on at least one side of the porous substrate. The coating layer includes an organic particle and a binder polymer, and the organic particle and the binder polymer are different materials from each other.

The organic particle may be positioned continuously or discontinuously on the surface of the binder polymer. The coating layer having the above structure can endow the separator with excellent strength and heat resistance.

The organic particles may have an average particle diameter of 1 nm to 1,000nm,. The organic particles may have an average particle diameter of 1 nm to 100 nm. The organic particles may have an average particle diameter of 1 nm to 10 nm. When the organic particle has an average particle diameter within the above ranges, the coating layer may have excellent strength and provide a separator having heat resistance.

The organic particle may be obtained from at least one organic compound selected from an acrylate-based compound and a derivative thereof, a diallyl phthalate-based compound and a derivative thereof, a polyimide-based compound and a derivative thereof, copolymers and mixtures thereof.

The organic particle may be specifically obtained by the following methods.

An acrylate-based compound is dispersed in an emulsifier, an aqueous copper sulfate solution in a small amount is added thereto, and a redox polymerization initiator is added thereto for emulsion-polymerization, obtaining the organic particle.

Alternatively, the organic particles may be obtained by polymerizing a diallyl phthalate-based compound in the presence of a water-soluble polymerization initiator.

As another example, the organic particles may be obtained by reacting an emulsion particle having a core part including a hydrophobic polymer and a shell part including a hydrophilic polymer with an aldehyde-based compound. Herein, the hydrophobic polymer has a glass transition temperature of greater than or equal to about 20°C and an acetoacetyl group. The hydrophilic polymer has a functional group being capable of being dispersed in water.

In addition, polyamic acid particulates can be dispersed into a hydrophilic solvent and imidized by acetic anhydride, pyridine, and the like, preparing a polyimide particulate dispersion, from which the hydrophilic solvent is removed through centrifugation. Then, a surfactant aqueous solution can be added to the remaining side products to substitute water, obtaining organic particles.

In addition, suitable organic particles include commerically available particles such as HA-DVD-500 having an average particle diameter of about 11.7 nm made by Nissan Chemical Industries Ltd., EPOSTAR MX020W having an average particle diameter ranging from about 3 nm to about 10 nm made by Nippon Shokubai Co., Ltd., and the like and these products having a reactive functional group.

The organic particles may have a glass transition temperature of greater than or equal to about 20°C and specifically, greater than or equal to about 50°C. More specifically, the organic particles may be sufficiently highly cross-linked in structure not to have a glass transition temperature.

The organic particle may be included in an amount of 1 to 50 wt%, and specifically 1 to 30 wt % or 1 to 20 wt% based on the total amount of the coating layer, that is the total amount of the organic particle and the binder polymer. Within the above amount range, heat resistance of the separator is improved and thus a lithium rechargeable battery having an excellent separator is realized.

The binder polymer may improve heat resistance of the separator, provide a matrix formed on the surface of the organic particle, and react with the binder as described below.

The binder polymer may be, but is not limited to, a polymer of an ethylenic unsaturated carboxylic acid alkyl ester such as methyl(meth)acrylic acid, ethyl(meth)acrylic acid, butyl(meth)acrylic acid, 2-ethylhexyl(meth)acrylic acid, and the like; a nitrile-based compound such as (meth)acrylonitrile, fumaronitrile, α - chloro(meth)acrylonitrile, α - cyanoethyl(meth)acrylonitrile, and the like; a conjugated diene-based compound such as 1,3-butadiene, isoprene, 2,3-dimethyl-1,3-butadiene, 2-ethyl-1,3-butadiene, 1,3-pentadiene, chloroprene, and the like; an ethylenic unsaturated carboxylic acid or a salt thereof such as (meth)acrylic acid, maleic acid, fumaric acid, citraconic acid, and the like; an aromatic vinyl compound such as styrene, alkylstyrene, vinylnaphthalene, and the like; a fluoroalkylvinylether such as fluoroethylvinylether, and the like; vinylpyridine; a non-conjugated diene-based compound such as vinylnorbornene, dicyclopentadiene, 1,4-hexadiene, and the like; an α-olefin such as ethylene, propylene, and the like; an ethylenic unsaturated amide compound such as (meth)acrylamide, and the like; a sulfonic acid-based unsaturated compound such as acrylamide methylpropane sulfonic acid, styrene sulfonic acid, and the like.

The binder polymer may further include a polymerized polymer of a monomer having a functional group, along with the polymer. The functional group may be a cross-linking point of the binder polymer during cross-linking, and specific examples include at least one selected from a hydroxyl group, a glycidyl group, an amino group, an N-methylol group, and a vinyl group, but are not limited thereto.

Specific examples of the monomer having a functional group may include a hydroxyester compound of an ethylenic unsaturated carboxylic acid such as hydroxypropyl(meth)acrylic acid, hydroxyethyl(meth)acrylic acid, and the like; a glycidylester compound of an ethylenic unsaturated carboxylic acid such as glycidyl(meth)acrylate, and the like; an aminoester compound of an ethylenic unsaturated carboxylic acid such as dimethylaminoethyl(meth)acrylate, and the like; a methylol group-containing ethylenic unsaturated amide compound such as N-methylol(meth)acrylamide, N-dimethylol(meth)acrylamide, and the like; a compound containing at least two vinyl groups, such as ethylene di(meth)acrylate, divinylbenzene, and the like.

The monomer having a functional group may be used in an amount of less than or equal to 5 wt%, and specifically less than or equal to 2 wt% based on the total amount of total monomers used to obtain the binder polymer. Within the above range, reaction with a functional group of a binder that will be described below is carried out, and thus adherence and heat resistance of the separator may be improved.

The binder polymer may be obtained by a manufacturing method such as emulsion polymerization, solution polymerization, and the like. During polymerization, the temperature, the pressure, the method of adding the monomer(s), and the like; and the kinds of additives such as polymerization initiators, molecular weight-adjusting agents, emulsifiers, pH adjusting agents, and the like are not limited specifically.

Examples of the polymerization initiator include a water-soluble initiator such as persulfate, and the like, and an oil-soluble initiator such as benzoyl peroxide, and the like.

Examples of the molecular weight-adjusting agent include mercaptans such as t-dodecyl mercaptan, n-dodecyl mercaptan, and the like; an α-methylstyrene dimer; sulfides such as dimethylxanthene disulfide, diisopropyl xanthene disulfide, and the like; nitrile compounds such as 2-methyl-3-butenenitrile, 3-pentenenitrile, and the like, and these may be used singularly or as a mixture of two or more.

Examples of the emulsifier include an anionic surfactant, a non-ionic surfactant, and the like, and these may be used singularly or as a mixture. A reactive surfactant, a protective colloid, and the like may also be used.

The binder polymer may have a glass transition temperature of -50 to 60°C, and specifically -40 to 20°C.

The binder polymer is not limited in shape but may be in the form of an emulsion including binder polymer particles dispersed therein.

The binder polymer particles dispersed in the emulsion may have an average particle diameter of 0.01 µm to 0.5 µm, specifically 0.05 µm to 0.5 µm, and more specifically 0.08 µm to 0.2 µm. Within these average particle diameter ranges, the emulsion may have an appropriate viscosity; the separator manufactured using the binder polymer may have excellent heat resistance, and a lithium rechargeable battery having excellent safety may be realized.

The emulsion may have pH ranging from 7 to 10.5 to maintain stability of the emulsion.

Examples of suitable pH adjusting agents include ammonia, an alkali metal hydroxide such as lithium hydroxide, sodium hydroxide, potassium hydroxide, and the like.

The emulsion may be prepared by well-known emulsion polymerization methods or by a phase inversion method. The conditions for the emulsion polymerization and phase inversion methods are not particularly limited.

The binder polymer may be included in an amount of 50 to 99 wt%. The binder polymer may be included in an amount of >50 %, and specifically in an amount of >50 % to 99 wt%. The binder polymer may be included in an amount of 70 to 99 wt% or 80 to 99 wt% based on the total amount of the coating layer, that is the total amount of the organic particle and the binder polymer. Within the above amount range, the adherence between the separator and the coating layer is improved, heat resistance of the separator is improved to provide a lithium rechargeable battery having excellent safety.

The coating layer may further include a binder along with the organic particle and the binder polymer.

Through the binder, the organic particle and the binder polymer may be linked organically, and the coating layer including the organic particle positioned on the surface of the binder polymer may be formed. Accordingly, the separator has improved heat resistance, a surface area of the binder polymer exposed on the surface of the coating layer and adherence with an electrode may be improved.

The binder may be a silane-based compound, and the silane-based compound may be a silane coupling agent.

The silane-based compound may include at least one functional group selected from an alkoxy group, a halogen group, an amino group, a vinyl group, a glycidoxy group, and a hydroxy group.

The functional group of the silane-based compound may react with the functional group of binder polymer.

Examples of the silane-based compound may include at least one selected from vinyl alkylalkoxysilanes such as vinyltris(β-methoxyethoxy)silane, γ-methacryloxylpropyltrimethoxysilane, and the like; epoxyalkylalkoxysilanes such as γ-glycidoxypropyltrimethoxysilane, β-(3,4-epoxycyclohexyl)ethyltrimethoxysilane, γ-glycidoxypropylmethyldiethoxysilane, and the like; aminoalkylalkoxysilanes such as γ-aminopropyltriethoxysilane, and the like; mercaptoalkylalkoxysilanes such as γ-mercaptopropyltrimethoxysilane, and the like; halogenated alkylalkoxysilanes such as γ-chloropropyltrimethoxysilane, and the like; vinylhalosilanes such as vinyltrichlorosilane, and the like; and alkylacyloxysilanes such as methyltriacetoxysilane and the like, but are limited thereto.

The binder may be included in an amount of 0.05 to 5 parts by weight and specifically 0.3 to 2 parts by weight based on 100 parts by weight of the binder polymer. Within the above range, linking between the binder polymer and the organic particle is sufficient, and excellent heat resistance may be provided.

In an aspect of the present invention, the separator is formed as follows. Specifically, an emulsion containing binder polymer particles is prepared and used to form a binder polymer, the binder polymer is mixed with organic particles to form a coating layer composition, and the coating layer composition is applied on the porous substrate to form a coating layer thereon. Thus, the coating layer may be formed by applying the coating layer-forming composition including the organic particle and the binder polymer, and optionally the binder, on the porous substrate.

The coating layer-forming composition may be prepared without limitation, and specifically the organic particles may be mixed with the binder polymer, and specifically an emulsion-type binder polymer, and dispersed, and the binder may be mixed and dispersed therein. Also, monomers for preparing the binder polymer may be mixed with the binder and polymerized, and then the organic particle mixed and dispersed therein.

The mixing and dispersing methods are not particularly limited but may include, for example, kneading using a Henschel mixer and the like, or a method of agitating using an agitator when the binder polymer is an emulsion.

One layer of the resulting coating layer may have a thickness of 0.1 µm to 5 µm. When the coating layer has a thickness within this range, excellent heat resistance may be achieved and a lithium rechargeable battery having high capacity may be provided.

The porous substrate may include at least one selected from a glass fiber, polyester, TEFLON, polyolefin, polytetrafluoroethylene (PTFE), and polyacrylonitrile. The porous substrate may comprise a single layer or multiple layers. Examples of multilayered substrates include a polyethylene/polypropylene double-layered separator, a polyethylene/polypropylene/polyethylene triple-layered separator, a polypropylene/polyethylene/polypropylene triple-layered separator, and the like. In an embodiment, even a single layer may have excellent heat resistance.

The separator may have a predetermined desirable thickness depending on capacity of a battery. For example, the separator may have a thickness ranging from 10 to 30 µm. When the separator has a thickness within this range, heat resistance may be improved and a lithium rechargeable battery having high capacity may be provided.

Hereinafter, a lithium rechargeable battery including the separator is described referring to FIGURE 1.

FIGURE 1 is a schematic view of a lithium rechargeable battery according to an embodiment. FIGURE 1 depicts a cylindrical lithium rechargeable battery which is provided as an example.

Referring to FIGURE 1, the rechargeable lithium battery 100 according to an embodiment includes an electrode assembly including a positive electrode 114, a negative electrode 112 facing the positive electrode 114, a separator 113 disposed between the positive electrode 114 and negative electrode 112, and an electrolyte (not shown) impregnating the positive electrode 114, negative electrode 112, and separator 113, a battery case 120 housing the electrode assembly, and a sealing member 140 sealing the battery case 120.

The negative electrode 112 includes a current collector and a negative active material layer disposed on the current collector.

The current collector may include a copper foil, a nickel foil, a stainless steel foil, a titanium foil, a nickel foam, a copper foam, a polymer substrate coated with a conductive metal, and combinations thereof, but is not limited thereto.

The negative active material layer includes a negative active material, a binder, and optionally a conductive material.

The negative active material includes a material that reversibly intercalates/deintercalates lithium ions, a lithium metal, a lithium metal alloy, a material being capable of doping/dedoping lithium, or a transition metal oxide.

The material that can reversibly intercalate/deintercalate lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

Examples of the lithium metal alloy include lithium and an element selected from the group consisting of Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, SiOₓ (o<x<2), a Si-C composite, a Si-Y alloy (wherein Y is selected from an alkali metal, an alkaline-earth metal, Group 13 to Group 16 elements, a transition element, a rare earth element, and a combination thereof, butnot Si), Sn, SnO₂, a Sn-C composite, Sn-Y (wherein Y is selected from an alkali metal, an alkaline-earth metal, Group 13 to Group 16 elements, a transition element, a rare earth element, and a combination thereof, but not Sn), and the like. At least one of these materials may be mixed with SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

Suitable transition metal oxides include vanadium oxide, lithium vanadium oxide, and the like.

The binder improves binding properties of negative active material particles with one another and with a current collector. Examples thereof may include polyvinylalcohol, carboxymethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is used to improve conductivity of an electrode. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material such as a metal powder or a metal fiber including copper, nickel, aluminium, silver, and the like; a conductive polymer such as a polyphenylene derivative; or a mixture thereof.

The negative electrode may be fabricated by mixing the active material, a conductive material, and a binder to prepare an active material composition and coating the active material composition on a current collector.

The positive electrode 114 includes a current collector and a positive active material layer disposed on the current collector. The positive active material includes a positive active material, a binder and optionally a conductive material.

The current collector may include aluminium (Al) but is not limited thereto.

The positive active material may include a compound that reversibly intercalates and deintercalates lithium (lithiated intercalation compound). Specifically, a composite oxide of at least one of cobalt, manganese, nickel, or combination thereof, and lithium may be used, and examples may be compounds represented by the following formulae:
LiₐA_{1-b}B_{b}D₂ (wherein, in the above formula, 0.90 ≤ a ≤ 1.8 and 0 ≤ b ≤ 0.5); LiₐE_{1-b}B_{b}O_{2-c}D_{c} (wherein, in the above formula, 0.90 ≤ a ≤ 1.8, o ≤ b ≤ 0.5, 0 ≤ c ≤ 0.05); LiE_{2-b}B_{b}O_{4-c}D_{c} (wherein, in the above formula, 0 ≤ b ≤ 0.5, 0 ≤ c ≤ 0.05); LiₐNi_{1-bc}Co_{b}B_{c}D_{α} (wherein, in the above formula, 0.90 ≤ a ≤ 1.8, 0 ≤ b ≤ 0.5, 0 ≤ c ≤ 0.05, 0 < α ≤ 2); LiₐNi_{1-b-c}Co_{b}B_{c}O_{2-α}F_{α} (wherein, in the above formula, 0.90 ≤ a ≤ 1.8, 0 ≤ b ≤ 0.5, 0 s c ≤ 0.05, 0 < α < 2); LiₐNi_{1-b-c}Co_{b}B_{c}O_{2-α}F₂ (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein, in the above formula, 0.90 ≤ a ≤ 1.8, 0 ≤ b ≤ 0.5, 0 ≤ c ≤ 0.05, 0 < α ≤ 2); L1ₐNi_{1-b-c}Mn_{b}B_{c}O_{2-α}F_{α} (wherein, in the above formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}O_{2-α}F₂ (wherein, in the above formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (wherein, in the above formula, 0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein, in the above formula, 0.90 ≤ a ≤ 1.8, 0.001 ≤ b ≤ 0.1); LiₐCoG_{b}O₂ (wherein, in the above formula, 0.90 ≤ a ≤ 1.8, 0.001 ≤ b ≤ 0.1); LiₐMnG_{b}O₂ (wherein, in the above formula, 0.90 ≤ a ≤ 1.8, 0.001 ≤ b ≤ 0.1); LiₐMn₂G_{b}O₄ (wherein, in the above formula, 0.90 ≤ a ≤ 1.8, 0.001 ≤ b ≤ 0.1); QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed by any method having no adverse influence on the properties of a positive active material by using these elements in the compound. For example, the method may include any coating method such as spray coating, dipping, and the like, but is not illustrated in more detail since it is well-known to those who work in the related field.

The binder improves binding properties of the positive active material particles to each other and to a current collector. Examples of the binder include polyvinylalcohol, carboxymethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

Any electrically conductive material may be used as a conductive material unless it causes a chemical change. Examples of the conductive material include: one or more of natural graphite, artificial graphite, carbon black, acetylene black, ketjen black, a carbon fiber, copper, a metal powder or a metal fiber including nickel, aluminium, silver, and the like, and a polyphenylene derivative.

The positive electrode 114 may be fabricated by mixing an active material, a conductive material, and a binder in a solvent to prepare an active material composition, and coating the composition on a current collector.

The electrode manufacturing method is well known, and thus is not described in detail in the present specification. The solvent may include N-methylpyrrolidone, and the like, but is not limited thereto.

The electrolyte includes a non-aqueous organic solvent and a lithium salt. The non-aqueous organic solvent plays the role of transmitting ions taking part in the electrochemical reaction of a battery. The non-aqueous organic solvent may include a carbonate-based, ester-based, ether-based, ketone-based, alcohol-based, or aprotic solvent.

The carbonate-based solvent may include, for example dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), butylene carbonate (BC), and the like.

Particularly, when a linear carbonate compound and a cyclic carbonate compound are mixed, a solvent having a high dielectric constant and a low viscosity may be provided. Herein, the cyclic carbonate compound and linear carbonate compound may be mixed in a volume ratio of about 1:1 to 1:9.

The ester-based solvent may include, for example methylacetate, ethylacetate, n-propylacetate, dimethylacetate, methylpropionate, ethylpropionate, γ-butyrolactone, decanolide, valerolactone, mevalonolactone, caprolactone, and the like. The ether solvent may include, for example dibutylether, tetraglyme, diglyme, dimethoxyethane, 2-methyltetrahydrofuran, tetrahydrofuran, and the like, and the ketone-based solvent may include cyclohexanone, and the like. The alcohol-based solvent may include ethanol, isopropyl alcohol, and the like.

The non-aqueous organic solvent may be used singularly or in a mixture. When the organic solvent is used in a mixture, its mixture ratio can be controlled in accordance with desirable performance of a battery.

The non-aqueous organic solvent may further include an aromatic hydrocarbon-based organic solvent as well as the carbonate-based solvent. The carbonate-based solvent and the aromatic hydrocarbon-based organic solvent may be mixed in a volume ratio of about 1:1 to about 30:1.

The aromatic hydrocarbon-based organic solvent may be an aromatic hydrocarbon-based compound represented by the following Chemical Formula 1.

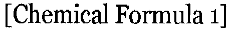

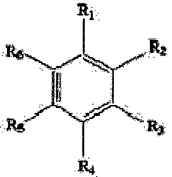

In Chemical Formula 1, R₁ to R₆ are each independently hydrogen, a halogen, a C₁ to C₁₀ alkyl group, a C₁ to C₁₀ haloalkyl group, or a combination thereof.

The aromatic hydrocarbon-based organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof.

The non-aqueous electrolyte may further include vinylene carbonate or an ethylene carbonate-based compound of the following Chemical Formula 2 in order to improve cycle-life of a battery.

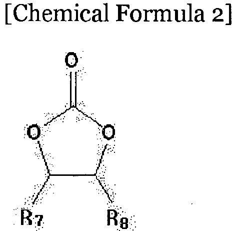

In Chemical Formula 2, R₇ and R₈ are each independently hydrogen, a halogen, a cyano group (CN), a nitro group (NO₂), or a C₁ to C₅ fluoroalkyl group, provided that at least one of R₇ and R₈ is a halogen, a cyano group (CN), a nitro group (NO₂), or a C₁ to C₅ fluoroalkyl group.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. When the vinylene carbonate or the ethylene carbonate-based compound is further used, their use amounts may be controlled to improve cycle-life.

The lithium salt dissolved in an organic solvent supplies lithium ions in the battery, operates a basic operation of a rechargeable lithium battery, and improves lithium ion transport between positive and negative electrodes. Examples of the lithium salt may include LiPF₆, LiBF₄, LiSbF₆, LiAsF₆, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂ (lithium bis(oxalato) borate; LiBOB), or a combination thereof, which is used as a supporting electrolytic salt. The lithium salt may be used at a 0.1 to 2.0M concentration. When the lithium salt is included at the above concentration range, electrolyte performance and lithium ion mobility may be enhanced due to optimal electrolyte conductivity and viscosity.

The separator 113 separates a negative electrode 112 from a positive electrode 114 and provides a transporting passage for lithium ions, which is the same as described above. The separator has improved adherence due to the coating layer including the binder polymer. Particularly, the separator adheres to an electrode stably in a pouch battery using a flexible envelope such as a laminate film, and the like and thus gaps caused by detachment of the electrode and separator may be prevented and a position of the separator may be fixed.

The following examples illustrate the present invention in more detail.

### Preparation of binder polymer

### Preparation Example 1

After nitrogen is substituted in a flask reactor having a condenser, a thermometer, a pipe for introducing a monomer emulsion, a pipe for introducing nitrogen gas, and an agitator, 60 parts by weight of distilled water and 1.5 parts by weight of sodium dodecylbenzene sulfonate were added thereto. Then, the temperature of the mixture was increased up to 80°C. Next, 2 parts by weight of styrene was added to the reactor, the mixture was agitated for 5 minutes, and 10 parts by weight of a 5% ammonium persulfate aqueous solution was added to the reactor to start a reaction. After one hour, a monomer emulsion including 30 parts by weight of 2-ethylhexylacrylate, 68 parts by weight of styrene, 2 parts by weight of acrylic acid, 0.5 parts by weight of sodium dodecylbenzenesulfonate salt, and 40 parts by weight of distilled water was added to the reactor over 3 hours in a dropwise fashion. Simultaneously, 6 parts by weight of a 5% ammonium persulfate aqueous solution was added to the reactor in a dropwise fashion over 3 hours. After adding the monomer in a dropwise fashion, the mixture was additionally reacted for 2 hours and then cooled down to 20°C, and the monomer remaining therein was removed under reduced pressure, obtaining a binder polymer emulsion. Binder polymer particles dispersed in the binder polymer emulsion had an average particle diameter of 150 nm. The average particle diameter was measured using nano GS (gas separation) and SEM (scanning electron microscope).

### Preparation Example 2

After nitrogen was substituted in a 10L autoclave reactor, 60 parts by weight of distilled water and 1.5 parts by weight of sodium dodecylbenzenesulfonate salt were added thereto, and the temperature of the mixture was increased up to 70°C. Next, 2 parts by weight of styrene was added to the reactor, the mixture was agitated for 5 minutes, and 10 parts by weight of a 2% potassium persulfate aqueous solution was added to the reactor to start a reaction. After one hour, a monomer emulsion including 40 parts by weight of butadiene, 46 parts by weight of styrene, 10 parts by weight of methylmethacrylate, 3 parts by weight of itaconic acid, 1 parts by weight of hydroxyethylacrylate, 0.5 parts by weight of sodium dodecylbenzenesulfonate salt, and 40 parts by weight of distilled water was added to the reactor in a dropwise fashion over 4 hours. Simultaneously, 10 parts by weight of a 2% potassium persulfate aqueous solution was added to the reactor over 3 hours. After adding the monomer emulsion, the mixture was additionally reacted for 3 hours and then cooled down to 20°C, and the monomer remaining there in removed under reduced pressure, obtaining a binder polymer emulsion. Binder polymer particles dispersed in the binder polymer emulsion had an average particle diameter of 200 nm. The average particle diameter was measured using nano GS (gas separation) and SEM (scanning electron microscope).

### Manufacture of Separator

### Example 1

10 wt% of polyimide particulates as organic particles was added to 90 wt% of the binder polymer emulsion according to Preparation Example 1, and the mixture was agitated for 10 minutes. 0.2 parts by weight (100 parts by weight of the binder polymer) of γ-glycidoxypropyltrimethoxysilane as a binder was added to the agitated mixture, and the resulting mixture was agitated for 20 minutes, preparing a coating layer-forming composition.

The coating layer-forming composition was gravure-printed on both sides of a 16 µm-thick polyethylene substrate, fabricating a separator. The coating layer was 3 µm-thick on each side.

### Example 2

A separator was fabricated according to the same method as Example 1 except for using 80 wt% of the binder polymer emulsion and 20 wt% of the polyimide particulate.

### Example 3

A separator was fabricated according to the same method as Example 1 except for using 70 wt% of the binder polymer emulsion and 30 wt% of the polyimide particulate.

### Example 4

A separator was fabricated according to the same method as Example 1 except for using the binder polymer emulsion according to Preparation Example 2.

### Example 5

A separator was fabricated according to the same method as Example 4 except for using 80 wt% of the binder polymer emulsion and 20 wt% of the polyimide particulate.

### Example 6

A separator was fabricated according to the same method as Example 4 except for using 70 wt% of the binder polymer emulsion and 30 wt% of the polyimide particulate.

### Comparative Example 1

The binder polymer according to Preparation Example 1 was gravure-printed on both sides of a 16µm-thick polyethylene substrate. The printed binder polymer was 3µm thick on each side.

### Comparative Example 2

A 16 µm-thick polyethylene separator was used.

### Comparative Example 3

A separator was fabricated according to the same method as Example 1 except for using 40 wt% of the binder polymer emulsion and 60 wt% of the polyimide particulate.

### Comparative Example 4

A separator was fabricated according to the same method as Example 1 except for using 30 wt% of the binder polymer emulsion and 70 wt% of the polyimide particulate.

### Comparative Example 5

A separator was fabricated according to the same method as Example 4 except for using 40 wt% of the binder polymer emulsion and 60 wt% of the polyimide particulate.

### Comparative Example 6

A separator was fabricated according to the same method as Example 4 except for using 30 wt% of the binder polymer emulsion and 70 wt% of the polyimide particulate.

### Fabrication of Lithium rechargeable battery

LiCoO₂ as a positive active material, polyvinylidene fluoride (PVDF) as a binder, and carbon as a conductive agent were mixed in a weight ratio of 92:4:4, and the mixture was dispersed in N-methyl-2-pyrrolidone, preparing a positive slurry.

This slurry was coated on a 20 µm-thick aluminium foil and then dried and compressed, fabricating a positive electrode.

On the other hand, a negative electrode active material slurry was prepared by mixing artificial graphite as a negative electrode active material, styrene-butadiene rubber as a binder, and carboxymethyl cellulose as a thickener in a weight ratio of 96:2:2 and dispersing the mixture. This slurry was coated on a 15 µm-thick copper foil and then, dried and compressed, fabricating a negative electrode.

The positive and negative electrodes and the separators according to Examples 1 to 6 and Comparative Examples 1 to 6 were respectively used to fabricate a pouch-type lithium rechargeable battery cell. Herein, an electrolyte solution was prepared by using a mixed solution EC (ethylene carbonate) / EMC (ethylmethyl carbonate) /DEC (diethyl carbonate) (3/5/2, volume ratio) including LiPF₆ in a concentration of 1.3M.

### Evaluation Example 1: Thermal shrinkage ratio test

The separators according to Examples 1 to 6 and Comparative Examples 1 to 6 were heat-treated at 130°C for 10 minutes in a convection oven and cooled down to room temperature and then their thermal shrinkage ratio was measured. The results are provided in the following Table 1.

### Evaluation Example 2: Evaluation of charge and discharge characteristics

Each lithium rechargeable battery cell including the separators according to Examples 1 to 6 and Comparative Examples 1 to 6 respectively was constant current charged with 0.2C of a current up to a voltage of 4.2V at 25°C, constant voltage charged up to a current of 0.01C while maintained at 4.2V, and constant current discharged with a constant current of 0.2C up to a voltage of voltage of 3.05V, completing its formation process.

After the formation process, the lithium rechargeable battery cells were constant current charged with 0.5C of a current up to a voltage of 4.2V at 25°C and constant voltage charged down to a current of 0.01C while the voltage of 4.2V was maintained, and discharged with 0.5C of a constant current down to a voltage of 3.0V, the cycle of which was 30 times repeated.

The results of the charge and discharge experiments, charge and discharge efficiency, and capacity retention are provided in the following Table 1. Herein, the charge and discharge efficiency was measured as a percentage of discharge capacity relative to charge capacity during the formation process, and the capacity retention was measured as a percentage of discharge capacity at the first cycle relative to discharge capacity at the 30th cycle.

**Table 1**

| | **Thermal shrinkage ratio** | **Charge and discharge efficiency** | **Capacity retention** |
|---|---|---|---|
| Example 1 | | | |
| Example 2 | | | |
| Example 3 | ○ | ○ | ○ |
| Example 4 | | ○ | |
| Example 5 | ○ | ○ | |
| Example 6 | | | ○ |
| Comparative Example 1 | × | ○ | ○ |
| Comparative Example 2 | × | ○ | |
| Comparative Example 3 | × | | |
| Comparative Example 4 | × | × | |
| Comparative Example 5 | × | | |
| Comparative Example 6 | × | × | |

- **Thermal shrinkage ratio**
   : less than 5%, o: greater than or equal to 5% and less than 10%, : greater than or equal to 10% and less than 15%, x: greater than or equal to 15%
- **Charge and discharge efficiency**
   : greater than or equal to 95%, o:greater than or equal to 90% and less than 95%, :greater than or equal to 85% and less than 90%, x: less than 85%
- **Capacity retention**
   : greater than or equal to 90%, o: greater than or equal to 85% and less than 90%, : greater than or equal to 80% and less than 85%, x: less than 80%

Referring to Table 1, the separators having a coating layer including an organic particle and a binder polymer, which is included within the appropriate range, according to Examples 1 to 6 had a lower thermal shrinkage ratio than the ones according to Comparative Examples 1 to 6 and improved heat resistance, resultantly accomplishing a lithium rechargeable battery cell with excellent safety.

In addition, the separators according to Examples 1 to 6 had higher charge and discharge efficiency and capacity retention than the ones according to Comparative Examples 1 to 6, realizing excellent performance of a lithium rechargeable battery cell.

**<Description of symbols>**

| | |
|---|---|
| 100: lithium rechargeable battery | 112: negative electrode |
| 113: separator | 114: positive electrode |
| 120: battery case | 140: sealing member |

Whilst the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A separator for a rechargeable lithium battery comprising:
a porous substrate; and
a coating layer disposed on at least one side of the porous substrate and including a binder polymer in an amount of 50 to 99 wt % based on the total amount of the coating layer, and further comprising organic particles included in the coating layer, wherein the binder polymer and the organic particles are different from each other;
wherein the organic particles are selected from the group consisting of acrylate-based compounds, diallyl phthalate-based compounds, polyimide-based compounds, derivatives thereof, copolymers thereof, and mixtures thereof;
wherein the binder polymer comprises a polymer formed by the polymerization of at least one monomer selected from the group consisting of an ethylenic unsaturated carboxylic acid alkyl ester, a nitrile-based compound, a conjugated diene-based compound, an ethylenic unsaturated carboxylic acid and salts thereof, an aromatic vinyl compound, a fluoroalkylvinylether, vinylpyridine, a non-conjugated diene based compound, an α-olefins, an ethylenic unsaturated amide compound, and a sulfonic acid-based unsaturated compound; and
the porous substrate includes at least one selected from a glass fiber, polyester, TEFLON, polyolefin, polytetrafluoroethylene (PTFE), and polyacrylonitrile.

2. A separator as claimed in claim 1, wherein the organic particles have an average particle diameter of 1 nm to 1,000 nm.

3. A separator as claimed in claim 1 or claim 2, wherein the binder polymer is included in an amount of 70 to 99 wt % based on the total amount of the coating layer.

4. A separator as claimed in any preceding claim, wherein the organic particles are included in an amount of 1 to 50 wt% based on the total amount of the organic particles and the binder polymer; preferably wherein the organic particles are included in any amount of 1 to 30 wt% based on the total amount of the organic particles and the binder polymer.

5. A separator as claimed in any preceding claim, wherein the binder polymer further comprises a polymer formed by the polymerization of one or more monomers having at least one functional group selected from a hydroxyl group, a glycidyl group, an amino group, an N-methylol group and a vinyl group.

6. A separator as claimed in any preceding claim, wherein the binder polymer is formed from an emulsion comprising binder polymer particles.

7. A separator as claimed in claim 6, wherein the binder polymer particles have an average particle diameter of 0.01 µm to 0.5 µm.

8. A separator as claimed in any preceding claim, wherein the coating layer further comprises a binder.

9. A separator as claimed in claim 8, wherein the binder includes a silane-based compound.

10. A separator as claimed in claim 8 or claim 9, wherein the silane-based compound includes at least one functional group selected from the group consisting of an alkoxy group, a halogen group, an amino group, a vinyl group, a glycidoxy group and a hydroxy group.

11. A separator as claimed in any of claims 8 to 10, wherein the binder is included in an amount of 0.05 to 5 parts by weight based on 100 parts by weight of the binder polymer.

12. A separator as claimed in any preceding claim, wherein the organic particle is provided, at least in part, at the surface of the binder polymer.

13. A rechargeable lithium battery comprising:
a positive electrode;
a negative electrode;
an electrolyte solution; and
a separator as claimed in any one of claims 1 to 12 disposed between the positive and negative electrodes.

14. A method of preparing the separator of any one of claims 1 to 12 comprising:
providing a porous substrate;
preparing an emulsion comprising binder polymer particles and forming a binder polymer from the emulsion;
mixing the binder polymer with organic particles to form a coating layer composition;
applying the coating layer composition on the porous substrate.

## Patentansprüche

1. Separator für eine wiederaufladbare Lithiumbatterie, umfassend:
ein poröses Substrat; und
eine Deckschicht, die auf mindestens einer Seite des porösen Substrats angeordnet ist und ein Bindemittelpolymer in einer Menge von 50 bis 99 Gew.-% basierend auf der Gesamtmenge der Deckschicht enthält, und ferner umfassend in der Deckschicht enthaltene organische Teilchen, wobei das Bindemittelpolymer und die organischen Teilchen unterschiedlich voneinander sind;
wobei die organischen Teilchen ausgewählt sind aus der Gruppe bestehend aus Acrylat-basierten Verbindungen, Diallylphthalat-basierten Verbindungen, Polyimidbasierten Verbindungen, Derivaten hiervon, Copolymeren hiervon sowie Mischungen hiervon;
wobei das Bindemittelpolymer ein Polymer umfasst, das durch die Polymerisation von mindestens einem Monomer ausgewählt aus der Gruppe bestehend aus einem ethylenischen ungesättigten Carbonsäurealkylester, einer Nitril-basierten Verbindung, einer konjugierten Dien-basierten Verbindung, einer ethylenischen ungesättigten Carbonsäure sowie Salzen hiervon, einer aromatischen Vinylverbindung, einem Fluoralkylvinylether, Vinylpyridin, einer nicht konjugierten Dien-basierten Verbindung, einem α-Olefin, einer ethylenischen ungesättigten Amidverbindung sowie einer Sulfonsäure-basierten ungesättigten Verbindung gebildet ist; und
das poröse Substrat mindestens eines ausgewählt aus einer Glasfaser, Polyester, TEFLON, Polyolefin, Polytetrafluorethylen (PTFE) und Polyacrylnitril enthält.

2. Separator nach Anspruch 1, wobei die organischen Teilchen einen durchschnittlichen Teilchendurchmesser von 1 nm bis 1000 nm aufweisen.

3. Separator nach Anspruch 1 oder 2, wobei das Bindemittelpolymer in einer Menge von 70 bis 99 Gew.-% basierend auf der Gesamtmenge der Deckschicht enthalten ist.

4. Separator nach einem der vorstehenden Ansprüche, wobei die organischen Teilchen in einer Menge von 1 bis 50 Gew.-% basierend auf der Gesamtmenge der organischen Teilchen und des Bindemittelpolymers enthalten sind; vorzugsweise wobei die organischen Teilchen in jeder Menge von 1 bis 30 Gew.-% basierend auf der Gesamtmenge der organischen Teilchen und des Bindemittelpolymers enthalten sind.

5. Separator nach einem der vorstehenden Ansprüche, wobei das Bindemittelpolymer ferner ein Polymer umfasst, das durch die Polymerisation von einem oder mehreren Monomeren mit mindestens einer funktionellen Gruppe ausgewählt aus einer Hydroxylgruppe, einer Glycidylgruppe, einer Aminogruppe, einer N-Methylolgruppe und einer Vinylgruppe gebildet ist.

6. Separator nach einem der vorstehenden Ansprüche, wobei das Bindemittelpolymer aus einer Emulsion umfassend Bindemittelpolymerteilchen gebildet ist.

7. Separator nach Anspruch 6, wobei die Bindemittelpolymerteilchen einen durchschnittlichen Teilchendurchmesser von 0,01 µm bis 0,5 µm aufweisen.

8. Separator nach einem der vorstehenden Ansprüche, wobei die Deckschicht ferner ein Bindemittel umfasst.

9. Separator nach Anspruch 8, wobei das Bindemittel eine Silan-basierte Verbindung enthält.

10. Separator nach Anspruch 8 oder 9, wobei die Silan-basierte Verbindung mindestens eine funktionelle Gruppe ausgewählt aus der Gruppe bestehend aus einer Alkoxygruppe, einer Halogengruppe, einer Aminogruppe, einer Vinylgruppe, einer Glycidoxygruppe und einer Hydroxygruppe enthält.

11. Separator nach einem der Ansprüche 8 bis 10, wobei das Bindemittel in einer Menge von 0,05 bis 5 Gewichtsteilen basierend auf 100 Gewichtsteilen des Bindemittelpolymers enthalten ist.

12. Separator nach einem der vorstehenden Ansprüche, wobei das organischen Teilchen zumindest teilweise an der Oberfläche des Bindemittelpolymers vorgesehen ist.

13. Wiederaufladbare Lithiumbatterie, umfassend:
eine positive Elektrode;
eine negative Elektrode;
eine Elektrolytlösung; und
einen Separator nach einem der Ansprüche 1 bis 12, der zwischen der positiven und der negativen Elektrode angeordnet ist.

14. Verfahren zur Herstellung des Separators nach einem der Ansprüche 1 bis 12, umfassend:
Vorsehen eine porösen Substrats;
Herstellen einer Emulsion umfassend Bindemittelpolymerteilchen und Bilden eines Bindemittelpolymers aus der Emulsion;
Mischen des Bindemittelpolymers mit organischen Teilchen zur Bildung einer Deckschichtzusammensetzung;
Aufbringen der Deckschichtzusammensetzung auf dem porösen Substrat.

## Revendications

1. Séparateur pour une batterie au lithium rechargeable, comprenant :
un substrat poreux ; et
une couche de revêtement disposée sur au moins une face du substrat poreux et comprenant un polymère servant de liant en une quantité de 50 à 99 % en poids sur la base de la quantité totale de la couche de revêtement, et comprenant en outre des particules organiques incorporées à la couche de revêtement, le polymère servant de liant et les particules organiques étant différents ; et
dans lequel les particules organiques sont choisies dans le groupe consistant en des composés à base d'acrylate, des composés à base de phtalate de diallyle, des composés à base de polyimide, leurs dérivés et leurs copolymères et leurs mélanges ;
dans lequel le polymère servant de liant comprend un polymère formé par polymérisation d'au moins un monomère choisi dans le groupe consistant en un ester alkylique d'acide carboxylique à insaturation éthylénique, un composé à base de nitrile, un composé à base de diène conjugué, un acide carboxylique à insaturation éthylénique et ses sels, un composé vinylique aromatique, un éther fluoro-alkylvinylique, la vinylpyridine, un composé à base de diène non conjugué, une α-oléfine, un amide à insaturation éthylénique et un composé insaturé à base d'acide sulfonique ; et
le substrat poreux comprend au moins un substrat poreux choisi entre une fibre de verre, un polyester, le Téflon, une polyoléfine, un polytétrafluoréthylène (PTFE) et un polyacrylonitrile.

2. Séparateur suivant la revendication 1, dans lequel les particules organiques ont un diamètre moyen de particule de 1 nm à 1000 nm.

3. Séparateur suivant la revendication 1 ou la revendication 2, dans lequel le polymère servant de liant est incorporé en une quantité de 70 à 99 % en poids sur la base de la quantité totale de la couche de revêtement.

4. Séparateur suivant l'une quelconque des revendications précédentes, dans lequel les particules organiques sont incorporées en une quantité de 1 à 50 % en poids sur la base de la quantité totale des particules organiques et du polymère servant de liant ; de préférence dans lequel les particules organiques sont incorporées en n'importe quelle quantité de 1 à 30 % en poids sur la base de la quantité totale des particules organiques et du polymère servant de liant.

5. Séparateur suivant l'une quelconque des revendications précédentes, dans lequel le polymère servant de liant comprend en outre un polymère formé par polymérisation d'un ou plusieurs monomères ayant au moins un groupe fonctionnel choisi entre un groupe hydroxyle, un groupe glycidyle, un groupe amino, un groupe N-méthylol et un groupe vinyle.

6. Séparateur suivant l'une quelconque des revendications précédentes, dans lequel le polymère servant de liant est formé à partir d'une émulsion comprenant des particules de polymère servant de liant.

7. Séparateur suivant la revendication 6, dans lequel les particules de polymère servant de liant ont un diamètre moyen de particule de 0,01 µm à 0,5 µm.

8. Séparateur suivant l'une quelconque des revendications précédentes, dans lequel la couche de revêtement comprend en outre un liant.

9. Séparateur suivant la revendication 8, dans lequel le liant comprend un composé à base de silane.

10. Séparateur suivant la revendication 8 ou la revendication 9, dans lequel le composé à base de silane comprend au moins un groupe fonctionnel choisi dans le groupe consistant en un groupe alkoxy, un groupe halogéno, un groupe amino, un groupe vinyle, un groupe glycidoxy et un groupe hydroxy.

11. Séparateur suivant l'une quelconque des revendications 8 à 10, dans lequel le liant est incorporé en une quantité de 0,05 à 5 parties en poids sur la base de 100 parties en poids du polymère servant de liant.

12. Séparateur suivant l'une quelconque des revendications précédentes, dans lequel la particule organique est fournie, au moins en partie, à la surface du polymère servant de liant.

13. Batterie au lithium rechargeable comprenant :
une électrode positive, une électrode négative, une solution d'électrolyte et un séparateur suivant l'une quelconque des revendications 1 à 12 disposé entre l'électrode positive et l'électrode négative.

14. Procédé pour la préparation du séparateur de l'une quelconque des revendications 1 à 12, comprenant :
la fourniture d'un substrat poreux ;
la préparation d'une émulsion comprenant des particules de polymère servant de liant et la formation d'un polymère servant de liant à partir de l'émulsion ;
le mélange du polymère servant de liant avec des particules organiques pour former une composition de couche de revêtement ;
l'application de la composition de couche de revêtement sur le substrat poreux.
